(19) Europäisches Patentamt
European Patent Office
Office européen des brevets

(11) Publication number: **0 344 888 B1**

# (12) EUROPEAN PATENT SPECIFICATION

(45) Date of publication of patent specification: **21.12.94**

(51) Int. Cl.5: **C08F 4/48**, C08F 36/04, C08F 4/54

(21) Application number: **89302710.2**

(22) Date of filing: **20.03.89**

## (54) Liquid telechelic polymers having high 1,4-diene structure.

(30) Priority: **31.05.88 US 200286**

(43) Date of publication of application:
**06.12.89 Bulletin 89/49**

(45) Publication of the grant of the patent:
**21.12.94 Bulletin 94/51**

(84) Designated Contracting States:
**DE ES FR GB IT**

(56) References cited:
**FR-A- 2 294 186**
**GB-A- 2 118 953**

(73) Proprietor: **GENCORP INC.**
**175 Ghent Road**
**Akron Ohio 44313 (US)**

(72) Inventor: **Fabris, Hubert J.**
**2260 Round Rock Drive**
**Akron Ohio 44313 (US)**
Inventor: **Livigni, Russell A.**
**2291 Manchester Road**
**Akron Ohio 44314 (US)**
Inventor: **Hargis, Glen I.**
**679 Atwood Drive**
**Tallmadge Ohio 44278 (US)**
Inventor: **Wilson, John A.**
**201 Hawk Avenue**
**Akron Ohio 44312 (US)**

(74) Representative: **Stoner, Gerard Patrick et al**
**MEWBURN ELLIS**
**York House**
**23 Kingsway**
**London WC2B 6HP (GB)**

EP 0 344 888 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to liquid telechelic polymers, processes for making them, and to anionic initiator systems adapted for use in those processes.

Heretofore, telechelic polymers made from dienes had various shortcomings or limitations arising from the polymerization process such as high solution viscosity, high bulk viscosity, high vinyl content which increased with lower molecular weight of the telechelic polymer, and the like. Often, gelation occurred. Such telechelic polymers were generally prepared utilizing only an organopolylithium initiator and a polar solvent to facilitate dissolution.

US-A-3,278,508 to Kahle et al relates to the polymerization of conjugated dienes such as 1,3-isoprene to form rubbery polymers having a high percentage of cis-1,4-addition product and reduced solution viscosities, utilizing an initiator of an organolithium in combination with an organoaluminum compound for producing high molecular weight polymers.

US-A-3,664,989 to Petrov et al relates to a method of preparing a homopolymer or a copolymer having terminal functional groups from a conjugated diene, optionally with a styrene type monomer, having a pre-set molecular weight wherein the polymerization is carried out in the presence of an alkali metal catalyst such as lithium, and a modifier obtained by reacting an alkali metal with a conjugated hydrocarbon and an organoaluminum compound.

US-A-4,518,753 to Richards et al relates to a process for the anionic polymerization of a conjugated diene in the presence of RLi and hindered triaryl boron or aluminum derivatives.

GB-A-1,294,890 to Petrov et al relates to the production of hydrocarbon polymers containing functional end groups by treating a conjugated diene polymer, containing at the chain ends thereof organometallic groups of a metal of Group II or Group III of the Periodic Table (but excluding transition metal), with a reagent selected from an alkylene oxide, carbon dioxide, oxygen, sulfur, and epichlorohydrin.

An article "Synthesis and Characterization of Functional Diene Oligomers in View of Their Practical Applications," Die Angewandte Makromolekulare Chemie, 70 (1978)9-30 (Nr. 1032), relates to the utilization of various initiators for butadiene oligomerization.

An article "Functionally Terminal Polymers via Anionic Methods," Schulz, Sanda and Willoughby, Chapter 27, Anionic Polymerization, Kinetics, Mechanisms and Synthesis, Symposium Series No. 166, American Chemical Society, Washington, D. C., 1981, relates to reacting monoacetal polybutadienyl lithium with ethylene oxide or carbon dioxide. Dihydroxy or hydroxy-carboxy terminated polymers are produced.

FR-A-2 294 186 (equivalent to US-A-4 092 268) describes the polymerisation of conjugated dienes, optionally including vinylaromatics, so as to achieve a high trans-1,4 content in a solid elastomeric product. The polymerisation uses an initiator composition comprising an organolithium compound - which may be a dilithium compound - as catalyst, and a barium or strontium organometallic compound - alcoholates are mentioned - as a co-catalyst.

In one aspect, the present invention provides an organo-functional terminated liquid telechelic polymer of number average molecular weight of not more than 15000 which is the polymerisation product of

(a) a diene monomer of 4 to 12 carbon atoms;
(b) optionally, a further diene of 4 to 12 carbon atoms as comonomer, and/or
(c) optionally, a vinyl substituted aromatic monomer of 8 to 12 carbon atoms as comonomer;

characterised in that the telechelic polymer has a content of vinyl structural units of 15% or less and a content of trans-1,4 groups of 65% or more, said contents being based on the total number of vinyl, cis and trans structural units deriving from said diene monomers.

In another aspect, the invention provides an anionic initiator system for the polymerisation of monomers, comprising:

(i) an organopolylithium component, and
(ii) a complex component preformed from a trialiphatic-substituted aluminium compound and a barium salt of allyl alcohol,

the mole ratio of Ba:Li in the initiator system being from 0.10 to 0.50.

In a further aspect, the invention provides an anionic initiator system for the polymerisation of monomers, comprising

(i) a dilithioisoprene oligomer of the formula

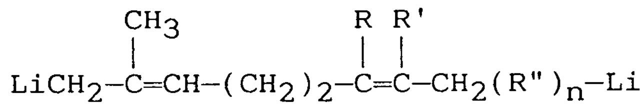

where

R = H or $CH_3$,

R' = $CH_3$ or H, with the proviso that R' is not the same as R,

R'' = 1,4 and 3,4 isoprene adducts,

n = approximately 4.0;

and

(ii) a complex component, preformed from a trialiphatic-substituted aluminium compound and barium alcoholate,

at a mole ratio Ba:Li from 0.10 to 0.50.

Further aspects include methods of making the initiator systems and methods of making the telechelic polymers, in particular by use of such initiator systems.

The low molecular weight liquid telechelic polymers made from dienes can be produced with a low vinyl content and a low bulk viscosity by utilizing a trimetallic initiator. The metallic initiator contains an organopolylithium compound wherein the organic group is an aliphatic, an aromatic, or an alkyl substituted aromatic and desirably has two lithium groups therein. A preformed complex of a triorgano substituted aluminum and a barium salt of an organic alcohol is blended with the organopolylithium compound. In order to produce a Wittig ate complex [G. Wittig, Angewandte Chem., 70, 65 (1958)] of barium and aluminum, the mole ratio of the aluminum metal to the barium metal is approximately 3.5 to about 4.5 whereas the mole ratio of the barium metal to the lithium metal is approximately from about 0.1 to about 0.5. The initiators are generally contained in various organic solvents so that they are dispersed therein. The dienes are generally conjugated dienes having from 4 to about 12 carbon atoms or optionally are copolymers wherein the comonomer is a different conjugated diene and/or a vinyl substituted aromatic having from 8 to 12 carbon atoms such as styrene. Although low molecular weight polymers are produced, that is having a number average molecular weight of 15,000 or less, the vinyl content of the polymer or copolymer is generally less than 15 percent, usually more than 1 percent, based upon the total amount of cis, trans, and vinyl structural groups therein derived from the diene monomers. The organic functional groups of the telechelic polymer are added after polymerization of the diene and the optional vinyl substituted aromatic monomers and such functional groups can be acid groups, mercapto groups, amino groups, hydroxyl groups, halogen groups, and the like.

The liquid telechelic polymers of the present invention are made from diene monomers and desirably conjugated dienes having from 4 to 12 carbon atoms and preferably from 4 to 8 carbon atoms with specific examples including isoprene, butadiene, 1,3-hexadiene, piperylene, and the like, with butadiene being preferred. Such dienes are well known to the art and to the literature and include various branched diene monomers such as 2,3-dimethyl-1,3-butadiene, 3-methyl-1,3-heptadiene, and the like. Although homopolymers are preferred, random and block copolymers can also be utilized. The comonomer is either one or more different conjugated dienes having from 4 to 8 carbon atoms and/or one or more vinyl substituted aromatics having from 8 to 12 carbon atoms such as styrene, alpha-methyl-styrene, p-tertiary butyl styrene, and the like, with styrene being preferred. The amount of vinyl substituted aromatic comonomer utilized is from about 0 to about 50 percent by weight and preferably from about 5 to about 25 percent by weight based upon the total weight of all of the comonomers and the diene monomer. The molecular weight of the liquid telechelic diene polymers of the present invention is generally low and hence the homopolymer or copolymer has a molecular weight of generally less than 15,000, desirably less than 5,000, and preferably less than 3,500, but has a minimum weight of at least 500. A molecular weight of from about 1,000 to about 2,000 is often utilized.

The polymers of the present invention can be formed by polymerizing the above-noted diene monomers in the presence of an anionic initiator system. The initiator system is generally a two component blend containing three metallic compounds with one of the blend components being an organopolylithium compound. Although the lithium component can contain a plurality of lithium atoms therein such as three or four, two lithium atoms are preferred. The organo group is generally an aliphatic including cycloaliphatic, more desirably an alkyl, having from 2 to 12 carbon atoms and preferably from 2 to 8 carbon atoms, an

aromatic or an aliphatic, desirably an alkyl, substituted aromatic having from 6 to 40 carbon atoms with from 6 to 30 carbon atoms being preferred. Examples of specific organo portions or groups of the lithium initiator component include divinyl benzene, diisopropenyl benzene, 1,1,4,4-tetraphenyl butane, 1,2-diphenylethene, 1,3-bis(phenylethenyl) benzene, 1,2-dibutyl-1,2-diphenylethene, isoprene, and the like. Generally, lithium adducts of oligomers or dimers are preferred wherein the number of repeating units in the oligomer is from 2 to about 10, with 2 to about 6 being preferred. The lithium adducts are generally made from dienes having from 4 to 12 carbon atoms, either straight-chained or branched, as for example 1,3-butadiene, isoprene, dialkyl-butadienes wherein the alkyl group contains from 1 to 3 carbon atoms such as 2,4-hexadiene, 2,5-dimethyl-2,4-hexadiene, 1,3,5-hexatriene, allocimene, myrcene, and the like. An especially preferred difunctional lithium initiator is a dilithioisoprene oligomer having the following formula

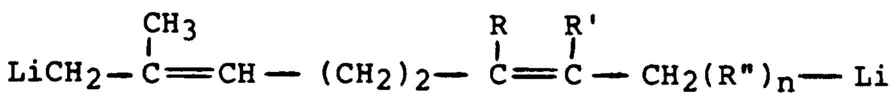

where

R = H or $CH_3$,

R′ = $CH_3$ or H, with the proviso that R′ is not the same as R

R″ = 1,4 and 3,4 isoprene adducts,

n = approximately 4.0

Average Molecular Weight = 432 when n = 4.0 The initiator is soluble in a mixture of cyclohexane and dimethylether at a molar equivalent ratio of 1 mole of dimethylether per mole of carbon-lithium bond.

The second component of the anionic initiator system is a preformed complex of a trialiphatic substituted aluminum compound and a barium salt of an organic alcohol. Each aliphatic group of the aluminum compound can independently contain from 1 to 20 carbon atoms, with from 2 to 4 carbon atoms being preferred. Desirably the aliphatic is an alkyl group. Examples of suitable aluminum compounds include trimethyl aluminum, triethylaluminum, tri-n-propyl aluminum, triisopropyl aluminum, pentyl diethyl aluminum, 2-methylpentyl-diethyl aluminum, tri-n-butyl aluminum, triisobutyl aluminum, dicyclohexylethyl aluminum, tri-n-pentyl aluminum, tri-n-hexyl aluminum, tri-n-octyl aluminum, tri(2-ethylhexyl)aluminum, tricyclopentyl aluminum, tricyclohexyl aluminum, tri(2,2,4-trimethylpentyl)aluminum, tri-n-dodecyl aluminum and tri(2-methylpentyl) aluminum and the like, with triethylaluminum being highly preferred.

The barium compound is actually the salt of an organic alcohol wherein the organic group is an aliphatic, desirably an alkyl, having from 1 to 15 carbon atoms and preferably from 2 to 10 carbon atoms; an aromatic, or an alkyl substituted aromatic having from 6 to 20 carbon atoms, with from 6 to 10 carbon atoms being preferred. Mixed alcohols can also be utilized. Examples of suitable alcohols include methanol, ethanol, propanol, isopropanol, n-butanol, cyclopentanol, cycloheptanol, cyclohexanol, s-butanol, t-butanol, allyl alcohol, pentanol, hexanol, octanol, decanol, phenol, nonyl phenol, ditertiarybutyl alcohol, and the like, with allyl alcohol being preferred.

The preformed aluminum/barium complex, that is the "ate" complex or component is formed by adding the two compounds together, generally suspended or dispersed in a solvent, and heating the same at a temperature of from about 75 °C to about 125 °C. The mole ratio of the aluminum compound to the barium compound is generally from about 3.5 to about 4.5, desirably from about 3.7 to about 4.3, and preferably from about 3.95 to about 4.05. The complexing temperature is generally from about 50 °C to about 125 °C with about 80 °C being optimum.

The trimetallic anionic initiator system is generally formed by mixing the organopolylithium component with the preformed complex component of the aluminum compound and the barium compound. The amounts of the two components are chosen such that the mole ratio of barium metal to lithium metal in the initiator is from about 0.10 to about 0.50, desirably from about 0.20 to about 0.40, and preferably from 0.22 to about 0.30. The obtained initiator system produces a low vinyl structure in the resulting diene polymer.

The lithium component and the preformed complex component of the anionic initiator system are generally dispersed in various nonaromatic hydrocarbon or nonpolar solvents. Suitable solvents include aliphatic solvents such as alkane solvents having from about 5 to about 20 carbon atoms, desirably from 5 to about 10 carbon atoms, with 6 carbon atoms being preferred, such as pentane, hexane, heptane, decane, and the like; as well as cycloaliphatic solvents having from 5 to 10 carbon atoms. Hexane, heptane or cyclohexane are preferred. Other hydrocarbon solvents include paraffinic hydrocarbon solvents such as various petroleum ethers and the like. Naturally, mixtures of the above solvents can also be utilized. The amount of solvent is not critical so long as a suitable amount is utilized to generally disperse or suspend the

particular components of the anionic initiator system.

The amount of the anionic initiator system based upon the molar amount of the dilithium initiator compound is generally from about 0.2 to about 2.0 moles, desirably from about 0.35 to about 1.5 moles, and preferably from about 0.5 to about 1.0 mole for every 1,000 grams by weight of diene monomer and any optional vinyl substituted aromatic comonomer.

Polymerization of a diene monomer such as butadiene utilizing a dilithioisoprenyl dimethyl ether complex in the absence of the barium and aluminum complex results in a polybutadiene having from about 20 to about 40 percent vinyl content at a number average molecular weight of from 1,000 to 15,000. In contrast thereto, utilization of the anionic trimetallic initiator system of the present invention in the above-noted amounts produces low molecular weight polymers having unexpected and significantly low vinyl content therein. The amount of the vinyl content is generally 15 percent or less, desirably 12 percent or less, and preferably 10 percent or less based upon the total of all of the cis, trans, and vinyl structural groups in the polymers derived from diene monomers. That is, this percentage is based only upon portions or units of the polymer or copolymer made from diene monomers, and not from units or portions made from vinyl substituted aromatic comonomers. The amount of the trans structural groups, that is the trans-1,4 groups, is at least 65 percent and preferably at least 69 percent based upon the total of all of the cis, trans and vinyl structural groups in the polymers derived from diene monomers. Another unexpected result is that the bulk viscosity of the polymer itself is significantly reduced over heretofore made polymers derived from diene monomers. The bulk viscosity of the polymers (i.e., solvent free) of the present invention is generally 60 poise or less, desirably 45 poise or less, and preferably 30 poise or less at a molecular weight of about 1,000 and at a temperature of approximately 21 °C. The solution viscosity is also low and thus improved processability is obtained.

The liquid telechelic polymers of the present invention generally can contain up to two organic functional groups. Various functional or endcapping groups can be chemically bonded to the terminal lithium portions of the polymer such as hydroxy groups, carboxylic acid groups, mercapto groups, amino groups, halogen groups, and the like. The functional or endcapping groups are added to the polymer by reacting a compound containing such groups with the polymer in the presence of an inert atmosphere. The addition of such functional or endcapping groups to lithium terminated polymers are well known to the art and to the literature. For example, polymers having hydroxyl endcapping groups can be prepared by reacting the lithium terminated polymer with various epoxides, aldehydes, or ketones. Acid end groups can be added by treating the polymer with carbon dioxide or with various cyclic anhydrides. Mercapto end groups are produced when sulfur, cyclic sulfides, or disulfides are utilized. Chlorine end groups can be prepared by reaction with chlorine. Amino end groups are added by reacting with mixtures of methoxyamine and methyl lithium, as well as with tertiary amino substituted aromatic aldehydes and ketones. Polymers containing hydroxyl or carboxylic acid functional end groups are preferred. The hydrocarbon portions of the various types of the above reaction compounds are known to the art and to the literature as for example as set forth in the references listed in Advances in Organometallic Chemistry, Stone & West, Volume 18, 1980, Academic Press, New York, New York, pages 89 through 93, by A. F. Halasa et al., Reference to this is recommended. Another article which sets forth various terminal telechelic end groups as well as the preparation thereof is set forth in the article "Telechelic Polymers - Precursors to High Solids Coatings," Progress In Organic Coatings, 7 (1979) 289-329, and again reference to this is recommended. Such endcapping compounds are reacted with the polymer obtained from diene monomers at temperatures of from about ambient for example 25 °C to about 100 °C and more desirably from about 25 °C to about 70 °C. Such reaction, as noted, is carried out in an inert atmosphere such as argon or nitrogen with the proviso that oxygen or oxygen-containing compounds such as water, carbon dioxide, and air should be excluded since they would react with the initiator. The amount of functional or endcapping compounds utilized is generally a large excess to ensure that essentially all or substantially all of the lithium terminated polymers are reacted and contain a functional or endcapping group thereon. Typically, the mole ratio of the functional or endcapping compound to carbon-lithium of the lithium terminated polymers is at least 1.5, desirably greater than 2, and often from about 3 to about 4. Naturally, very large excesses, for example 20 or 30, can be utilized as when a carbon dioxide gas is utilized to add carboxylic acid end groups.

Liquid telechelic polymers presently described have several advantages which clearly distinguish them from prior art polymers. A low process viscosity provides improved rheological behavior including efficient mixing with fillers such as aluminum and salts of perchloric acid, carbon black, calcium carbonate, magnesium silicate, silica, and the like. The generally high 1,4-structure and the associated low glass transition temperature (less than minus 65 °C) of the polymers exemplified herein impart excellent low temperature elastomeric properties. Hence, the polymers described may generally have application in situations requiring low vitrification temperatures. Since high amounts of trans-1,4- content or structure

(about 70 percent) is contained within the polymers, they can provide low levels of crystallinity and provide networks with improved fatigue life and cut-growth resistance. Accordingly, the polymers of the present invention may be utilized as binders as for solid fuel rocket propellants, coatings, intermediates for polyurethanes, and the like.

The invention will be better understood by reference to the following description of the polymer characterization and examples.

Polymer Characterization

Composition and percent polybutadiene microstructure were obtained from $^{13}C$ NMR. Number average molecular weights were determined with a Hitachi vapor pressure osmometer. Hydroxyl content was determined by acetylation with acetic-1-$^{14}C$ anhydride, followed by isolation and radioassay of the product. Gel permeation chromatograms were obtained using a Waters High Performance Gel Permeation Chromatograph, Model 150C. Solutions at 0.5 weight percent in THF were injected onto columns at a flow rate of 1 ml/minute. The instrument oven and the differential refractometer were at 30 ° C. The column set (styragel) configuration used, as designated by Waters Associates, was $10^5$Å + $10^4$Å + $10^3$Å + $10^2$Å.

All thermal transitions were obtained by differential scanning calorimetry (DSC) using a heating rate of 20 ° C./minute. Glass transition temperatures (Tg) were determined from the midpoint of the inflection in the plot of heat flow with temperature in the heating curve at a heating rate of 20 ° C/minute, obtained after quenching the sample from 125 ° C to minus 150 ° C.

Bulk viscosity (poise) of the liquid polymers were determined with a Brookfield viscometer (20 rpm spindle rotation) at room temperature.

Gel content was determined in toluene using a Harris cage.

Williams Plasticity

The hydroxyl terminated polybutadienes were crosslinked with Desmodur L-2291A, 1,6-hexamethylene diisocyanate adduct of trimethylolpropane of functionality 3.0 from Mobay Chemical Company. Dibutyltin dilaurate was used as a catalyst. The materials were crosslinked in an oven at 80 ° C for four hours. A Williams Plastometer was used to determine the plasticity, expressed in mils and taken after three minutes.

Functionality

This entity was calculated from the ratio of number average molecular weight, determined with vapor pressure osmometry, and equivalent average molecular weight, determined by radiochemical assay of acetylated end groups containing carbon-14.

EXAMPLE 1

A hydroxy terminated polybutadiene (HTPB) was prepared with a Ba/Al/DiLi initiator system as shown in Table I. The trimetallic catalyst was prepared by the addition of a solution of dilithium (DiLi) oligomer (0.415 mM/g) of isoprene in cyclohexane (containing 3 weight percent dimethyl ether) to a solution of preformed Ba/Al complex in cyclohexane. This complex was obtained by adding a solution of triethylaluminum (2.17 mM/g) in cyclohexane to a suspension of barium diallyl oxide (0.213 mM/g) in cyclohexane and heating at 80 ° C for 1 hour to provide a clear solution. A polybutadiene (Run 1, Table I) was prepared with this Ba/Al/DiLi catalyst in cyclohexane in a one liter glass bottle reactor. For comparison purposes, a control polybutadiene (Run 2, Table I) was obtained using only DiLi as the initiator. All polymerizations were quantitative and their solution viscosities in cyclohexane were nearly equivalent. However, the addition of ethylene oxide (4 moles per mole carbon-lithium) to the DiLi initiated polybutadiene (Run 2) produced an extremely viscous gel-like mass that did not flow at room temperature. The solution viscosity of the high-1,4 polybutadienyl anions of Run 1 was only slightly increased. It should be noted that upon addition of isopropanol (15 g), the solution viscosities of the hydroxyl polybutadienes of Runs 1 and 2 were reduced to the same level. The liquid pol-ers were recovered by treating the reaction mixture with citric acid (34 g) dissolved in a mixture of 4 liters water and 0.1 liter isopropanol. The resulting mixtures were allowed to stand for one hour and then the cyclohexane phase containing the liquid polymers were separated, antioxidant (1 phr A.O. 2246) added, and the products were recovered in a rotary evaporator. The predicted number-average molecular weight based on the ratio of incorporated butadiene, isoprene (initiator) and ethylene oxide to moles of carbon-lithium was 1020, compared to measured $M_n$ values of 975 and 1130 for

Runs 1 and 2, respectively.

TABLE I

Preparation of Hydroxyl Terminated Polybutadiene with Ba/Al/DiLi

| Run No. | Polym.[a] Temp. (°C) | Butadiene (grams) | Initiator[b] Ba | Al | DiLi[c] | Mole Ratios Al/Ba | Ba/Li | Ethylene Oxide (grams) | % Conv.[d] | % Vinyl |
|---|---|---|---|---|---|---|---|---|---|---|
| 1 | 65 | 100 | 0.090 | 0.369 | 0.374 | 4.1 | 0.24 | 66 | 100 | 11 |
| 2 | 65 | 100 | - | - | 0.374 | - | - | 66 | 100 | 40 |

[a]polymerized in cyclohexane (380 g)

[b]moles per 100 g butadiene

[c]moles of carbon-lithiumin solution of DiLi per 100 g butadiene

[d]based on 100 g butadiene, 74 g isoprene contributed by the initiator, and 16.8 g ethylene oxide incorporated as $-CH_2CH_2OH$ per carbon lithium

As apparent from Table I, Run 1 utilizing a trimetallic initiator embodying the invention produced a hydroxyl terminated polybutadiene containing a significantly low amount, that is less than 11 percent by weight of vinyl groups based upon the total number of cis, trans, and vinyl groups within the polymer. In

contrast thereto, Run 2 which utilized only a conventional organodilithium initiator of the prior art produced a polymer containing 40 percent by weight of vinyl groups therein.

EXAMPLE 2

A comparison of vinyl content, hydroxyl end group functionality and Tg of HTPB's of various molecular weights is shown in Table II. The polymers were prepared with the Ba/Al/DiLi catalyst system described in Example 1 and with the DiLi catalyst, as indicated in Table II. A polybutadiene (R-45HT) produced by Arco Chemical Co. and reported as a telechelic hydroxy terminated polybutadiene obtained by a free radical initiation [M. Kanakavel Makromol. Chem., 188,845 (1987)] is provided (in Run 7) for comparison purposes. The data clearly show that the use of the Ba/Al complex in combination with DiLi substantially reduces vinyl content and lowers Tg below the value obtainable with DiLi with no sacrifice in hydroxyl functionality. The extent of reduction in vinyl content is independent of molecular weight. The vinyl content of the HTPB's of this disclosure remains at about 10 percent for the limited range of molecular weights (975 and 1650) shown. For HTPB's prepared with DiLi, vinyl content increases from 28 to 40 percent with a decrease in molecular weight from 4500 to 1860. The data in Table II show that, for HTPB's with $M_n \leqq 2000$, the level of vinyl unsaturation can be decreased from about 40 to 10 percent by the use of Ba/Al/DiLi catalyst. With the drop in vinyl content, a concomitant change in Tg from minus 50 °C to minus 65 °C can be seen.

TABLE II

| Run No. | Initiator[a] | Mole Ratio $Al^{3+}/Ba^{2+}$ | $M_n$ | % Diene Structure Vinyl | Trans | Cis | Tg, °C | Hydroxyl Functionality |
|---|---|---|---|---|---|---|---|---|
| 1 | I | 4.0 | 975 | 11 | 69 | 20 | -66 | 1.5 |
| 2 | II | (DiLi alone) | 1130 | 40 | 38 | 22 | -50 | 1.5 |
| 3 | I | 4.2 | 1650 | 9 | 70 | 21 | -65 | 1.6 |
| 4 | II | (DiLi alone) | 1860 | 40 | 37 | 23 | -51 | 1.4 |
| 5 | II | (DiLi alone) | 2420 | 36 | 35 | 25 | -56 | 1.7 |
| 6 | II | (DiLi alone) | 4540 | 28 | 42 | 30 | - | 1.6 |
| 7[b] | III | - | 2800 | 20 | 60 | 20 | - | 2.3 |

[a]I - barium diallyl oxide/triethylaluminum with dilithium adduct of isoprene complexed with dimethyl ether

II - dilithium adduct of isoprene complexed with dimethyl ether

III - free radical

[b]HTPB (R-45HT) produced by Arco Chemical Company

For anionic polymerization of diene monomers initiated by organolithium compounds in hydrocarbon solvents, a Poisson molecular weight distribution (MWD) is characteristic of polymers of high degrees of polymerization. The MWD distribution is often broadened for low molecular oligomers prepared with high concentrations of certain dilithio initiators; however, the degree of polydispersity is considerably less than for a corresponding radical initiated HTPB (R-45HT). A comparison of the data in Table III of HTPB's

prepared with Ba/Al/DiLi and DiLi shows that the MWD's are nearly the same. Both anionic polymers have narrower MWD's than R-45HT, as indicated by their $\overline{M}_w/\overline{M}_n$ values.

TABLE III

| Run No. | Initiator[a] | $\overline{M}_n$ | By HPGPC $\overline{M}_n$ | $\overline{M}_w$ | $\overline{M}_w/\overline{M}_n$ |
|---|---|---|---|---|---|
| 1 | I | 975 | 1400 | 2000 | 1.43 |
| 2 | II | 1130 | 1400 | 2200 | 1.57 |
| 7 | III | 2800 | 4670 | 13400 | 2.87 |

[a] see Table II for description of initiators

EXAMPLE 3

An HTPB was prepared according to Example 1 (Run 1) in the absence of the barium component utilizing an Al/DiLi (mole ratio = 1/1) complex as the initiator system. The data in Table IV show that Al/DiLi can reduce the vinyl content from 40 to 25 percent as well as reduce the amount of trans-1,4 content to a level such that the polymer is amorphous, but it is considerably less effective than the Ba/Al/DiLi catalyst system for obtaining vinyl contents as low as 10 percent and a trans content as high as 70 percent at nearly the same molecular weight.

In addition to a low vinyl structure, the data in Table IV show a much higher trans/cis ratio of HTPB (Run 9) compared to HTPB's (Runs 4 and 8). The higher level of trans-1,4 placements in combination with a sufficient chain length may provide a crystallizable trans-HTPB telechelic with implications of improved

elastomeric properties.

**TABLE IV**

| Run No. | Initiator[a] | Mole Ratio Al/Li | Mole Ratio Ba/Li | $\overline{M}_n$ | % Diene Structure Vinyl | % Diene Structure Trans | % Diene Structure Cis | Tg, °C | Hydroxyl Functionality |
|---|---|---|---|---|---|---|---|---|---|
| 4 | DiLi | - | - | 1860 | 40 | 37 | 23 | -51 | 1.4 |
| 8 | Al/DiLi | 0.86 | - | 1440 | 25 | 45 | 30 | -57 | 1.5 |
| 9 | Ba/Al/DiLi | 0.96 | 0.24 | 1490 | 9 | 71 | 20 | -65 | 1.5 |

EXAMPLE 4

As discussed in Example 1, when solutions of dilithium polybutadiene (Run 2) are reacted with ethylene oxide, the viscosity of the solution rises markedly and a stiff gel forms as a result of association of the polymeric electrolyte. In contrast to this behavior, solutions of polybutadiene (prepared with Ba/Al/DiLi) terminated with ethylene oxide exhibit only a small increase in solution viscosity, such that the solution remains fluid. Thus, mixing problems associated with gelation can be avoided without resorting to the use of polar solvents to break up the association of ions.

As previously mentioned, low polymer viscosity is another characteristic of the telechelic high 1,4-polybutadienes. The data in Table V show that, at nearly the same number-average molecular weight and polydispersity values, there is a threefold decrease in polymer viscosity on going from 40 to 11 percent vinyl content. The lower viscosity of the low molecular weight HTPB's of this invention, largely accounted for by the reduced vinyl content, can provide obvious practical advantages in applications such as castable elastomers.

TABLE V

| Run No. | Initiator[a] | $\bar{M}_n$ [b] | $\bar{M}_w/\bar{M}_n$ [c] | % Vinyl | Tg, °C | Viscosity, poise at 21°C |
|---|---|---|---|---|---|---|
| 1 | I | 975 | 1.48 | 11 | -66 | 27 |
| 2 | II | 1130 | 1.53 | 40 | -50 | 84 |

[a] see Table II for description of initiators

[b] measured by vapor pressure osmometry

[c] measured by high performance gel permeation chromotography

EXAMPLE 5

The HTPB's of Example 1 were cured with an adduct of 1,6-hexamethylene diisocyanate and trimethylolpropane and catalyzed with dibutyltin dilaurate. A comparison of the Williams plasticity values (Table VI) at equivalent mole ratios (NCO/OH) demonstrates that the quality of the hydroxyl terminated polybutadienes of this invention are equivalent to the control material made with a dilithio compound as the sole initiator.

TABLE VI

| | RUN NO. | |
|---|---|---|
| | 1 | 2 |
| Initiator | I | II |
| Hydroxyl Functionality | 1.5 | 1.5 |
| Williams Plasticity[a] (mils) | 340 | 310 |
| % Gel[b] | 85 | 83 |

[a]Values reported for polyurethanes prepared with a mole ratio (NCO/OH) of 1.1.
[b]In toluene.

## Claims

### Claims for the following Contracting States : DE, FR, GB, IT

**1.** An organo-functional terminated liquid telechelic polymer of number average molecular weight of not more than 15000 which is the polymerisation product of
(a) a diene monomer of 4 to 12 carbon atoms;
(b) optionally, a further diene of 4 to 12 carbon atoms as comonomer, and/or
(c) optionally, a vinyl substituted aromatic monomer of 8 to 12 carbon atoms as comonomer;
characterised in that the telechelic polymer has a content of vinyl structural units of 15% or less and a content of trans-1,4 groups of 65% or more, said contents being based on the total number of vinyl, cis and trans structural units deriving from said diene monomers.

**2.** A telechelic polymer according to claim 1, wherein said vinyl substituted aromatic monomer (c) is present, in an amount of up to about 50 wt% based on the total of components (a),(b) and (c).

**3.** A telechelic polymer according to claim 1 which is a homopolymer of component (a).

**4.** A telechelic polymer according to any one of claims 1 to 3, having a number average molecular weight of at least 500.

**5.** A telechelic polymer according to any one of the preceding claims wherein said content of vinyl structural units is 12% or less.

**6.** A telechelic polymer according to any one of the preceding claims wherein the diene monomer or monomers are of 4 to 8 carbon atoms.

**7.** A telechelic polymer according to any one of the preceding claims wherein the terminating functional telechelic groups are one or more of hydroxyl, carboxylic acid, mercapto, amino, and halogen.

**8.** A telechelic polymer according to any one of the preceding claims wherein said content of trans-1,4 groups is 69% or more.

**9.** A binder for a solid rocket fuel, made from a telechelic polymer according to any one of claims 1 to 8.

**10.** An anionic initiator system for the polymerisation of monomers, comprising:

(i) an organopolylithium component, and

(ii) a complex component preformed from a trialiphatic-substituted aluminium compound and a barium salt of allyl alcohol,

the mole ratio of Ba:Li in the system being from 0.10 to 0.50.

**11.** An initiator system according to claim 10 in which the organo-portion of the organopolylithium component is:

an aliphatic of from 2 to 12 carbon atoms;

an aromatic, or aliphatic-substituted aromatic, of from 6 to 40 carbon atoms, or

an oligomer having from 2 to 10 repeat units of a diene of from 4 to 12 carbon atoms.

**12.** An initiator system according to claim 10 or claim 11 wherein the organopolylithium component is a dilithium compound.

**13.** An anionic initiator system for the polymerisation of monomers, comprising

(i) a dilithioisoprene oligomer of the formula

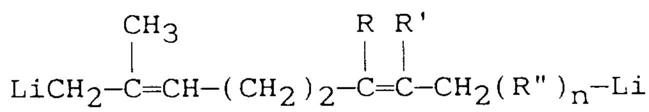

where

| | |
|---|---|
| R = | H or $CH_3$, |
| R' = | $CH_3$ or H, with the proviso that R' is not the same as R, |
| R'' = | 1,4 and 3,4 isoprene adducts, |
| n = | approximately 4.0; |

(ii) a complex component, preformed from a trialiphatic-substituted aluminium compound and barium alcoholate,

the mole ratio Ba:Li in the system being from 0.10 to 0.50.

**14.** An initiator system according to any one of claims 10 to 13 wherein the the three aliphatic groups of the aluminium compound have, independently, from 1 to 20 carbon atoms each.

**15.** An initiator system according to claim 13 or 14 wherein the barium alcoholate is of a $C_{1-15}$ alkyl alcohol, an aromatic or aliphatic-substituted aromatic alcohol of from 6 to 20 carbon atoms, or of allyl alcohol.

**16.** An initiator system according to any one of claims 10 to 15 wherein the mole ratio of Al:Ba is from 3.5 to 4.5.

**17.** A process for making an anionic initiator for the polymerisation of monomers, comprising blending an organopolylithium component with a preformed complex component of aluminium and barium compounds, said components being as defined in any one of claims 10 to 16.

**18.** A polymerisation process for making a liquid telechelic polymer wherein

(a) a diene monomer of 4 to 12 carbon atoms;

(b) optionally, a further diene of 4 to 12 carbon atoms as comonomer, and/or

(c) optionally, a vinyl substituted aromatic monomer of 8 to 12 carbon atoms as comonomer;

are polymerised using an anionic initiator system according to any one of claims 10 to 16.

**19.** A polymerisation process according to claim 18 wherein the product is a liquid telechelic polymer according to any one of claims 1 to 8.

**Claims for the following Contracting State : ES**

1. A method of making an organo-functional terminated liquid telechelic polymer of number average molecular weight of not more than 15000, comprising polymerising
   (a) a diene monomer of 4 to 12 carbon atoms;
   (b) optionally, a further diene of 4 to 12 carbon atoms as comonomer, and/or
   (c) optionally, a vinyl substituted aromatic monomer of 8 to 12 carbon atoms as comonomer;
   characterised in that the resulting liquid telechelic polymer has a content of vinyl structural units of 15% or less and a content of trans-1,4 groups of 65% or more, said contents being based on the total number of vinyl, cis and trans structural units deriving from said diene monomers.

2. A method according to claim 1 in which the polymerisation uses an anionic initiator system comprising
   (i) an organopolylithium component, and
   (ii) a complex component preformed from a trialiphatic-substituted aluminium compound and a barium salt of allyl alcohol,
   the mole ratio Ba:Li in the initiator system being from 0.10 to 0.50.

3. A method according to claim 2 in which the organo-portion of the organopolylithium component is:
   an aliphatic of from 2 to 12 carbon atoms;
   an aromatic, or aliphatic-substituted aromatic, of from 6 to 40 carbon atoms, or
   an oligomer having from 2 to 10 repeat units of a diene of from 4 to 12 carbon atoms.

4. A method according to claim 2 or claim 3 in which the organopolylithium component is a dilithium compound.

5. A method according to claim 1 in which the polymerisation uses an anionic initiator system comprising
   (i) a dilithioisoprene oligomer of the formula

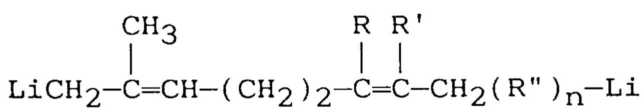

   where
   R = H or $CH_3$,
   R' = $CH_3$ or H, with the proviso that R' is not the same as R,
   R'' = 1,4 and 3,4 isoprene adducts,
   n = approximately 4.0;
   and
   (ii) a complex component, preformed from a trialiphatic-substituted aluminium compound and barium alcoholate;
   the mole ratio Ba:Li being from 0.10 to 0.50.

6. A method according to claim 5 in which the barium alcoholate is of a $C_{1-15}$ alkyl alcohol, an aromatic or aliphatic-substituted aromatic alcohol of from 6 to 20 carbon atoms, or of allyl alcohol.

7. A method according to any one of claims 2 to 6 in which the three aliphatic groups of the aluminium compound have, independently, from 1 to 20 carbon atoms each.

8. A method according to any one of claims 2 to 7 in which the mole ratio of Al:Ba in the initiator system is from 3.5 to 4.5.

9. A method according to any one of the preceding claims, wherein said vinyl substituted aromatic monomer (c) is used, in an amount of up to about 50 wt% based on the total of components (a),(b) and (c).

10. A method according to any one of claims 1 to 8 which makes a homopolymer of component (a).

**11.** A method according to any one of the preceding claims in which the resulting polymer has a number average molecular weight of at least 500.

**12.** A method according to any one of the preceding claims wherein said content of vinyl structural units is 12% or less.

**13.** A method according to any one of the preceding claims wherein the diene monomer or monomers have from 4 to 8 carbon atoms.

**14.** A method according to any one of the preceding claims wherein the terminating functional telechelic groups are selected from hydroxyl, carboxylic acid, mercapto, amino, and halogen.

**15.** A method according to any one of the preceding claims wherein said content of trans-1,4 groups is 69% or more.

**16.** A method of making an anionic initiator system for the polymerisation of monomers, comprising blending:

(i) an organopolylithium component, and

(ii) a complex component preformed from a trialiphatic-substituted aluminium compound and a barium salt of allyl alcohol,

the mole ratio of Ba:Li in the initiator system being from 0.10 to 0.50.

**17.** A method according to claim 16 in which the organo-portion of the organopolylithium component is:

an aliphatic of from 2 to 12 carbon atoms;

an aromatic, or aliphatic-substituted aromatic, of from 6 to 40 carbon atoms, or

an oligomer having from 2 to 10 repeat units of a diene of from 4 to 12 carbon atoms.

**18.** A method according to claim 16 or claim 17 wherein the organopolylithium component is a dilithium compound.

**19.** A method of making an anionic initiator system for the polymerisation of monomers, comprising blending

(i) a dilithioisoprene oligomer of the formula

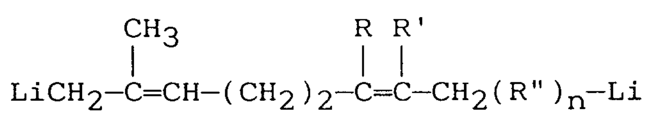

where

| | |
|---|---|
| R = | H or $CH_3$, |
| R' = | $CH_3$ or H, with the proviso that R' is not the same as R, |
| R'' = | 1,4 and 3,4 isoprene adducts, |
| n = | approximately 4.0; |

and

(ii) a complex component, preformed from a trialiphatic-substituted aluminium compound and barium alcoholate,

at a mole ratio Ba:Li from 0.10 to 0.50.

**20.** A method according to any one of claims 16 to 19 wherein the three aliphatic groups of the aluminium compound have, independently, from 1 to 20 carbon atoms each.

**21.** A method according to claim 19 wherein the barium alcoholate is of a $C_{1-15}$ alkyl alcohol, an aromatic or aliphatic-substituted aromatic alcohol of from 6 to 20 carbon atoms, or of allyl alcohol.

**22.** A method according to any one of claims 16 to 21 wherein the mole ratio of Al:Ba is from 3.5 to 4.5.

**Patentansprüche**
**Patentansprüche für folgende Vertragsstaaten : DE, FR, GB, IT**

1. Organo-funktionales terminiertes flüssiges telechelisches Polymer mit einem zahlenmäßig durchschnittlichen Molekulargewicht von nicht mehr als 15000, welches das Polymerisationsprodukt
   (a) eines Dienmonomers mit 4 bis 12 C-Atomen;
   (b) gegebenenfalls eines weiteren Diens mit 4 bis 12 C-Atomen als Comonomer, und/oder
   (c) gegebenenfalls eines vinylsubstituierten aromatischen Monomers mit 8 bis 12 C-Atomen als Comonomer

   ist;
   dadurch gekennzeichnet, daß das telechelische Polymer einen Gehalt an Vinylstruktureinheiten von 15% oder weniger und einen Gehalt an trans-1,4 Gruppen von 65% oder mehr aufweist, wobei diese Gehalte auf die Gesamtzahl von Vinyl-, cis- und trans-Struktureinheiten bezogen sind, die aus diesen Dienmonomeren hergeleitet sind.

2. Telechelisches Polymer nach Anspruch 1, worin das genannte vinylsubstituierte aromatische Monomer (c) in einer Menge von bis zu etwa 50 Gew.-% bezogen auf die Gesamtmenge der Komponenten (a), (b) und (c) vorhanden ist.

3. Telechelisches Polymer nach Anspruch 1, das ein Homopolymer von Komponente (a) ist.

4. Telechelisches Polymer nach einem der Ansprüche 1 bis 3, das ein zahlenmäßig durchschnittliches Molekulargewicht von zumindest 500 aufweist.

5. Telechelisches Polymer nach einem der vorhergehenden Ansprüche, worin der genannte Gehalt an Vinylstruktureinheiten 12% oder weniger ist.

6. Telechelisches Polymer nach einem der vorhergehenden Ansprüche, worin das oder die Dienmonomer(en) 4 bis 8 C-Atome aufweist/aufweisen.

7. Telechelisches Polymer nach einem der vorhergehenden Ansprüche, worin die terminierenden funktionalen telechelischen Gruppen eine oder mehrere von Hydroxyl, Karbonsäure, Mercapto, Amino und Halogen sind.

8. Telechelisches Polymer nach einem der vorhergehenden Ansprüche, worin der genannte Gehalt an trans-1,4 Gruppen 69% oder mehr beträgt.

9. Bindemittel für einen festen Raketenbrennstoff, der aus einem telechelischen Polymer nach einem der Ansprüche 1 bis 8 besteht.

10. Anionisches Initiatorsystem zur Polymerisation von Monomeren, umfassend:
    (i) eine Organopolylithium-Komponente, und
    (ii) eine Komplexkomponente, die aus einer trialiphatisch-substituierten Aluminiumverbindung und einem Bariumsalz von Allylalkohol vorgebildet ist, wobei das Molverhältnis von Ba:Li im System von 0,10 bis 0,50 beträgt.

11. Initiatorsystem nach Anspruch 10, worin der Organo-Anteil der Organopolylithiumkomponente
    ein Aliphat mit 2 bis 12 C-Atomen;
    ein Aromat oder Aliphat-substituierter Aromat mit 6 bis 40 C-Atomen, oder
    ein Oligomer mit 2 bis 10 sich wiederholenden Einheiten eines Diens von 4 bis 12 C-Atomen ist.

12. Initiatorsystem nach Anspruch 10 oder Anspruch 11, worin die Organopolylithiumkomponente eine Dilithiumverbindung ist.

13. Anionisches Initiatorsystem zur Polymerisation von Monomeren, umfassend

(i) ein Dilithioisoprenoligomer der Formel

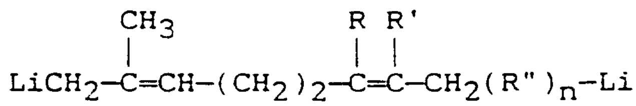

worin

R = H oder $CH_3$,
R' = $CH_3$ oder H, mit der Maßgabe, daß R' nicht das gleiche wie R ist,
R'' = 1,4 und 3,4 Isoprenaddukte,
n = etwa 4,0;

(ii) eine Komplexkomponente, die aus einer trialiphatisch-substituierten Aluminiumverbindung und Bariumalkoholat vorgebildet ist, wobei das Molverhältnis Ba:Li im System von 0,10 bis 0,50 beträgt.

**14.** Initiatorsystem nach einem der Ansprüche 10 bis 13, worin die drei aliphatischen Gruppen der Aluminiumverbindung unabhängig voneinander jeweils 1 bis 20 C-Atome aufweisen.

**15.** Initiatorsystem nach Anspruch 13 oder 14, worin das Bariumalkoholat aus einem $C_{1-15}$ Alkylalkohol, einem aromatischen oder aliphatisch-substituierten aromatischen Alkohol mit 6 bis 20 C-Atomen oder aus Allylalkohol gebildet wird.

**16.** Initiatorsystem nach einem der Ansprüche 10 bis 15, worin das Molverhältnis von Al:Ba von 3,5 bis 4,5 beträgt.

**17.** Verfahren zur Herstellung eines anionischen Initiators zur Polymerisation von Monomeren, umfassend das Vermischen einer Organopolylithiumkomponente mit einer vorgebildeten Komplexkomponente von Aluminium- und Bariumverbindungen, wobei diese Komponenten sowie in einem der Ansprüche 10 bis 16 definiert sind.

**18.** Polymerisationsverfahren zur Herstellung eines flüssigen telechelischen Polymers, worin:

(a) ein Dienmonomer mit 4 bis 12 C-Atomen;
(b) gegebenenfalls ein weiteres Dien mit 4 bis 12 C-Atomen als Comonomer, und/oder
(c) gegebenenfalls ein vinylsubstituiertes aromatisches Monomer mit 8 bis 12 C-Atomen als Comonomer

unter Verwendung eines anionischen Initiatorsystems nach einem der Ansprüche 10 bis 16 polymerisiert wird bzw. werden.

**19.** Polymerisationsverfahren nach Anspruch 18, worin das Produkt ein flüssiges telechelisches Polymer nach einem der Ansprüche 1 bis 8 ist.

**Patentansprüche für folgenden Vertragsstaat : ES**

**1.** Verfahren zur Herstellung eines organo-funktionalen terminierten flüssigen telechelischen Polymers mit einem zahlenmäßig durchschnittlichen Molekulargewicht von nicht mehr als 15000, umfassend das Polymerisieren

(a) eines Dienmonomers mit 4 bis 12 C-Atomen;
(b) gegebenenfalls eines weiteren Diens mit 4 bis 12 C-Atomen als Comonomer, und/oder
(c) gegebenenfalls eines vinylsubstituierten aromatischen Monomers mit 8 bis 12 C-Atomen als Comonomer;

dadurch gekennzeichnet, daß das resultierende flüssige telechelische Polymer einen Gehalt an Vinylstruktureinheiten von 15% oder weniger und einen Gehalt an trans-1,4 Gruppen von 65% oder mehr aufweist, wobei diese Gehalte auf die Gesamtzahl von Vinyl-, cis- und trans-Struktureinheiten bezogen sind, die aus diesen Dienmonomeren hergeleitet sind.

**2.** Verfahren nach Anspruch 1, bei dem die Polymerisation ein anionisches Initiatorsystem verwendet, umfassend:

(i) eine Organopolylithium-Komponente, und
(ii) eine Komplexkomponente, die aus einer trialiphatisch-substituierten Aluminiumverbindung und einem Bariumsalz von Allylalkohol vorgebildet ist,
wobei das Molverhältnis Ba:Li im Initiatorsystem von 0,10 bis 0,50 beträgt.

**3.** Verfahren nach Anspruch 2, worin der Organo-Anteil der Organopolylithiumkomponente
ein Aliphat mit 2 bis 12 C-Atomen;
ein Aromat oder aliphatisch-substituierter Aromat mit 6 bis 40 C-Atomen, oder
ein Oligomer mit 2 bis 10 sich wiederholenden Einheiten eines Diens mit 4 bis 12 C-Atomen ist.

**4.** Verfahren nach Anspruch 2 oder Anspruch 3, bei dem die Organopolylithiumkomponente eine Dilithiumverbindung ist.

**5.** Verfahren nach Anspruch 1, bei dem die Polymerisation ein anionisches Initiatorsystem verwendet, umfassend
(i) ein Dilithioisoprenoligomer der Formel

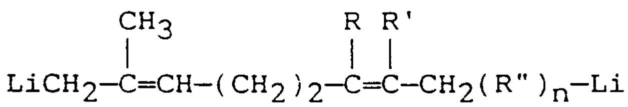

worin
R = H oder $CH_3$,
R' = $CH_3$ oder H, mit der Maßgabe, daß R' nicht das gleiche wie R ist,
R" = 1, 4 und 3, 4 Isoprenaddukte,
n = etwa 4,0;
und
(ii) eine Komplexkomponente, die aus einer trialiphatisch-substituierten Aluminiumverbindung und Bariumalkoholat vorgebildet ist;
wobei das Molverhältnis Ba:Li von 0,10 bis 0,50 beträgt.

**6.** Verfahren nach Anspruch 5, bei dem das Bariumalkoholat aus einem $C_{1-15}$ Alkylalkohol, einem aromatischen oder aliphatisch-substituierten aromatischen Alkohol mit 6 bis 20 C-Atomen oder aus Allylalkohol besteht.

**7.** Verfahren nach einem der Ansprüche 2 bis 6, bei dem die drei aliphatischen Gruppen der Aluminiumverbindung unabhängig voneinander jeweils von 1 bis 20 C-Atome aufweisen.

**8.** Verfahren nach einem der Ansprüche 2 bis 7, bei dem das Molverhältnis von Al:Ba im Initiatorsystem von 3,5 bis 4,5 beträgt.

**9.** Verfahren nach einem der vorhergehenden Ansprüche, worin das genannte vinylsubstituierte aromatische Monomer (c) in einer Menge von bis zu etwa 50 Gew.-% bezogen auf die Gesamtmenge der Komponenten (a), (b) und (c) verwendet wird.

**10.** Verfahren nach einem der Ansprüche 1 bis 8, das ein Homopolymer von Komponente (a) herstellt.

**11.** Verfahren nach einem der vorhergehenden Ansprüche, bei dem das resultierende Polymer ein zahlenmäßig durchschnittliches Molekulargewicht von zumindest 500 aufweist.

**12.** Verfahren nach einem der vorhergehenden Ansprüche, worin der genannte Gehalt an Vinylstruktureinheiten 12% oder weniger ist.

**13.** Verfahren nach einem der vorhergehenden Ansprüche, worin das oder die Dienmonomer(en) von 4 bis 8 C-Atome aufweist/aufweisen.

**14.** Verfahren nach einem der vorhergehenden Ansprüche, worin die terminierenden funktionalen telechelischen Gruppen aus Hydroxyl, Karbonsäure, Mercapto, Amino und Halogen ausgewählt sind.

**15.** Verfahren nach einem der vorhergehenden Ansprüche, worin der genannte Gehalt an trans-1,4 Gruppen 69% oder mehr beträgt.

**16.** Verfahren zur Herstellung eines anionischen Initiatorsystems zur Polymerisation von Monomeren, umfassend das Vermischen:

(i) einer Organopolylithiumkomponente, und

(ii) einer Komplexkomponente, die aus einer trialiphatisch-substituierten Aluminiumverbindung und einem Bariumsalz von Allylalkohol vorgebildet ist,

wobei das Molverhältnis von Ba:Li im Initiatorsystem von 0,10 bis 0,50 beträgt.

**17.** Verfahren nach Anspruch 16, bei dem der Organo-Anteil der Organopolylithiumkomponente
ein Aliphat mit 2 bis 12 C-Atomen;
ein Aromat oder aliphatisch-substituierter Aromat mit 6 bis 40 C-Atomen, oder
ein Oligomer mit 2 bis 10 sich wiederholenden Einheiten eines Diens mit 4 bis 12 C-Atomen ist.

**18.** Verfahren nach Anspruch 16 oder Anspruch 17, worin die Organopolylithiumkomponente eine Dilithiumverbindung ist.

**19.** Verfahren zur Herstellung eines anionischen Initiatorsystems zur Polymerisation von Monomeren, umfassend das Vermischen

(i) eines Dilithioisoprenoligomers der Formel

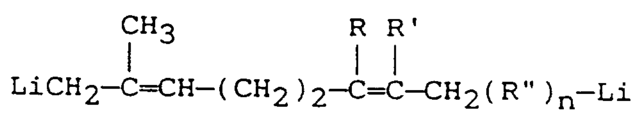

worin
R = H oder $CH_3$,
R' = $CH_3$ oder H, mit der Maßgabe, daß R' nicht das gleiche wie R ist,
R'' = 1,4 und 3,4 Isoprenaddukte,
n = etwa 4,0;
und

(ii) einer Komplexkomponente, die aus einer trialiphatisch-substituierten Aluminiumverbindung und Bariumalkoholat vorgebildet ist,

bei einem Molverhältnis von Ba:Li von 0,10 bis 0,50.

**20.** Verfahren nach einem der Ansprüche 16 bis 19, worin die drei aliphatischen Gruppen der Aluminiumverbindung unabhängig voneinander jeweils von 1 bis 20 C-Atome aufweisen.

**21.** Verfahren nach Anspruch 19, worin das Bariumalkoholat aus einem $C_{1-15}$ Alkylalkohol, einem aromatischen oder aliphatisch-substituierten aromatischen Alkohol mit 6 bis 20 C-Atomen oder aus Allylalkohol gebildet wird.

**22.** Verfahren nach einem der Ansprüche 16 bis 21, worin das Molverhältnis von Al:Ba von 3,5 bis 4,5 beträgt.

**Revendications**
**Revendications pour les Etats contractants suivants : DE, FR, GB, IT**

**1.** Polymère téléchélique liquide organo-fonctionnellement terminé d'un poids moléculaire moyen en nombre ne dépassant pas 15000 qui est le produit de polymérisation de

(a) un monomère diène de 4 à 12 atomes de carbone ;

(b) facultativement, un autre diène de 4 à 12 atomes de carbone en tant que comonomère, et/ou

(c) facultativement, un monomère aromatique vinyle substitué de 8 à 12 atomes de carbone en tant que comonomère ;

caractérisé en ce que le polymère téléchélique a une teneur en unités structurelles de vinyle de 15% ou moins et une teneur en groupes trans-1,4 de 65% ou plus, lesdites teneurs étant basées sur le nombre total d'unités de structure vinyle, cis et trans dérivant desdits monomères diènes.

**2.** Polymère téléchélique selon la revendication 1 où ledit monomère aromatique vinyle substitué (c) est présent en une quantité pouvant atteindre 50% en poids en se basant sur le total des composants (a), (b) et (c).

**3.** Polymère téléchélique selon la revendication 1 qui est un homopolymère du composant (a).

**4.** Polymère téléchélique selon l'une quelconque des revendications 1 à 3 ayant un poids moléculaire moyen en nombre d'au moins 500.

**5.** Polymère téléchélique selon l'une quelconque des revendications précédentes où ladite teneur en unités structurelles de vinyle est de 12% ou moins.

**6.** Polymère téléchélique selon l'une quelconque des revendications précédentes où le monomère ou les monomères diènes sont de 4 à 8 atomes de carbone.

**7.** Polymère téléchélique selon l'une quelconque des revendications précédentes où les groupes téléchéliques fonctionnellement terminés sont un ou plusieurs parmi hydroxyle, acide carboxylique, mercapto, amino et halogène.

**8.** Polymère téléchélique selon l'une quelconque des revendications précédentes où ladite teneur en groupes trans-1,4 est de 69% ou plus.

**9.** Liant d'un combustible solide pour fusée produit à partir d'un polymère téléchélique selon l'une quelconque des revendications 1 à 8.

**10.** Système initiateur anionique pour la polymérisation de monomères comprenant :

(i) un composant d'organopolylithium, et

(ii) un composant complexe préformé à partir d'un composé d'aluminium trialiphatique substitué et d'un sel de baryum d'un alcool allylique, le rapport molaire de Ba:Li dans le système étant de 0,10 à 0,50.

**11.** Système initiateur selon la revendication 10, où la portion organo du composant d'organopolylithium est :

un aliphatique de 2 à 12 atomes de carbone ;
un aromatique, ou bien aromatique aliphatique substitué de 6 à 40 atomes de carbone, ou
un oligomère ayant 2 à 10 unités récurrentes d'un diène de 4 à 12 atomes de carbone.

**12.** Système initiateur selon la revendication 10 ou la revendication 11 où le composant d'organopolylithium est un composé de dilithium.

**13.** Système initiateur anionique pour la polymérisation de monomères, comprenant

(i) un oligomère de dilithioisoprène de la formule

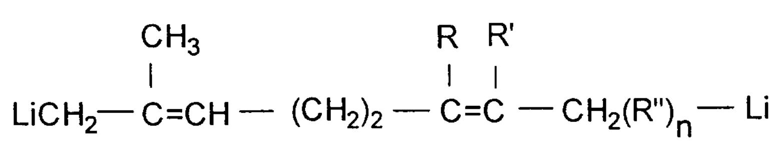

où
R = H ou $CH_3$,

R' = $CH_3$ ou H, à condition que R' ne soit pas identique à R,
R'' = produits d'addition de 1,4 et 3,4 isoprène,
n = environ 4,0 ;
(ii) composant complexe, préformé à partir d'un composé d'aluminium trialiphatique substitué et d'un alcoolate de baryum,
le rapport molaire de Ba:Li dans le système étant de 0,10 à 0,50.

**14.** Système initiateur selon l'une quelconque des revendications 10 à 13, où les trois groupes aliphatiques du composé d'aluminium ont, indépendamment, 1 à 20 atomes de carbone.

**15.** Système initiateur selon la revendication 13 ou 14, où l'alcoolate de baryum est d'un alcool alkylique $C_{1-15}$, d'un alcool aromatique ou aromatique aliphatique substitué de 6 à 20 atomes de carbone ou d'un alcool allylique.

**16.** Système initiateur selon l'une quelconque des revendications 10 à 15, où le rapport molaire de Al:Ba est de 3,5 à 4,5.

**17.** Procédé de production d'un initiateur anionique pour la polymérisation de monomères comprenant le mélange d'un composant d'organopolylithium avec un composant complexe préformé de composés d'aluminium et de baryum, lesdits composants étant tels que définis selon l'une quelconque des revendications 10 à 16.

**18.** Procédé de polymérisation pour la production d'un polymère téléchélique liquide, où
(a) un monomère diène de 4 à 12 atomes de carbone ;
(b) facultativement, un autre diène de 4 à 12 atomes de carbone en tant que comonomère, et/ou
(c) facultativement, un monomère aromatique vinyle substitué de 8 à 12 atomes de carbone en tant que comonomère ;
sont polymérisés en utilisant un système initiateur anionique selon l'une quelconque des revendications 10 à 16.

**19.** Procédé de polymérisation selon la revendication 18, où le produit est un polymère téléchélique liquide selon l'une quelconque des revendications 1 à 8.

**Revendications pour l'Etat contractant suivant : ES**

**1.** Méthode de production d'un polymère téléchélique liquide organo-fonctionnellement terminé d'un poids moléculaire moyen en nombre ne dépassant pas 15000, consistant à polymériser
(a) un monomère diène de 4 à 12 atomes de carbone
(b) facultativement, un autre diène de 4 à 12 atomes de carbone en tant que comonomère, et/ou
(c) facultativement, un monomère aromatique vinyle substitué de 8 à 12 atomes de carbone en tant que comonomère ;
caractérisée en ce que le polymère téléchélique liquide résultant a une teneur en unités structurelles de vinyle de 15% ou moins et une teneur en groupes trans-1,4 de 65% ou plus, lesdites teneurs étant basées sur le nombre total des unités de structure de vinyle, cis et trans dérivant desdits monomères diènes.

**2.** Méthode selon la revendication 1 où la polymérisation emploie un système initiateur anionique comprenant
(i) un composant d'organopolylithium, et
(ii) un composant complexe préformé à partir d'un compose d'aluminium trialiphatique substitué et d'un sel de baryum d'alcool allylique,
le rapport molaire de Ba:Li dans le système initiateur étant compris entre 0,10 et 0,50.

**3.** Méthode selon la revendication 2 où la portion organo du composant d'organopolylithium est :
un aliphatique de 2 à 12 atomes de carbone ;
un aromatique, ou bien aromatique aliphatique substitué, de 6 à 40 atomes de carbone, ou
un oligomère ayant 2 à 10 unités récurrentes d'un diène de 4 à 12 atomes de carbone.

**4.** Méthode selon la revendication 2 ou la revendication 3, où le composant d'organopolylithium est un composé de dilithium.

**5.** Méthode selon la revendication 1, où la polymérisation emploie un système initiateur anionique comprenant

(i) un oligomère de dilithioisoprène de la formule

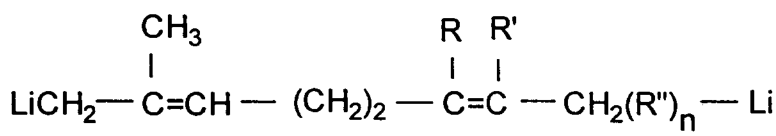

où
R = H ou $CH_3$,
R' = $CH_3$ ou H, à condition que R' ne soit pas identique à R,
R" = produits d'addition de 1,4 et 3,4 isoprène,
n = environ 4,0 ;
et

(ii) un composant complexe préformé à partir d'un compose d'aluminium trialiphatique substitué et d'un alcoolate de baryum ;

le rapport molaire de Ba:Li dans le système étant de 0,10 à 0,50.

**6.** Méthode selon la revendication 5 où l'alcoolate de baryum est d'un alcool alkylique $C_{1-15}$, d'un alcool aromatique ou aromatique aliphatique substitué de 6 à 20 atomes de carbone ou d'un alcool allylique.

**7.** Méthode selon l'une quelconque des revendications 2 à 6, où les trois groupes aliphatiques du composé d'aluminium ont indépendamment de 1 à 20 atomes de carbone chacun.

**8.** Méthode selon l'une quelconque des revendications 2 à 7, où le rapport molaire de Al:Ba dans le système initiateur est de 3,5 à 4,5.

**9.** Méthode selon l'une quelconque des revendications précédentes, où ledit monomère aromatique vinyle substitué (c) est utilisé en une quantité pouvant atteindre environ 50% en poids en se basant sur le total des composés (a), (b) et (c).

**10.** Méthode selon l'une quelconque des revendications 1 à 8, qui produit un homopolymère du composant (a).

**11.** Méthode selon l'une quelconque des revendications précédentes, où le polymère résultant a un poids moléculaire moyen en nombre d'au moins 500.

**12.** Méthode selon l'une quelconque des revendications précédentes, où ladite teneur en unités structurelles de vinyle est de 12% ou moins.

**13.** Méthode selon l'une quelconque des revendications précédentes, où le monomère diène ou les monomères ont de 4 à 8 atomes de carbone.

**14.** Méthode selon l'une quelconque des revendications précédentes, où les groupes téléchéliques fonctionnellement terminés sont choisis parmi hydroxyle, acide carboxylique, mercapto, amino et halogène.

**15.** Méthode selon l'une quelconque des revendications précédentes, où ladite teneur en groupes trans-1,4 est de 69% ou plus.

**16.** Méthode de production d'un système initiateur anionique pour la polymérisation de monomères, consistant à mélanger :

(i) un composant d'organopolylithium, et

(ii) un composant complexe préformé à partir d'un compose d'aluminium trialiphatique substitué et d'un sel de baryum d'un alcool allylique,
le rapport molaire de Ba:Li dans le système initiateur étant de 0,10 à 0,50.

**17.** Méthode selon la revendication 16, où la portion organo du composant d'organopolylithium est :
un aliphatique de 2 à 12 atomes de carbone ;
un aromatique, ou aromatique aliphatique substitué de 6 à 40 atomes de carbone, ou
un oligomère ayant 2 à 10 unités récurrentes d'un diène de 4 à 12 atomes de carbone.

**18.** Méthode selon la revendication 16 ou la revendication 17, où le composant d'organopolylithium est un composé de dilithium.

**19.** Méthode de production d'un système initiateur anionique pour la polymérisation des monomères, consistant à mélanger
(i) un oligomère de dilithioisoprène de la formule

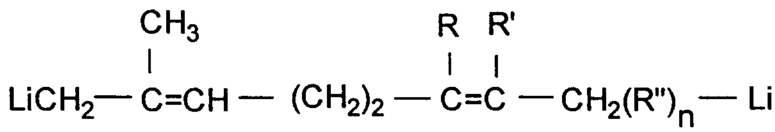

où
R = H ou $CH_3$,
R' = $CH_3$ ou H, à condition que R' ne soit pas identique à R,
R'' = produits d'addition de 1,4 et 3,4 isoprène,
n = environ 4,0 ;
(ii) un composant complexe préformé à partir d'un compose d'aluminium trialiphatique substitué et d'un alcoolate de baryum,
à un rapport molaire de Ba:Li de 0,10 à 0,50.

**20.** Méthode selon l'une quelconque des revendications 16 à 19, où les trois groupes aliphatiques du composé d'aluminium, ont indépendamment, de 1 à 20 atomes de carbone chacun.

**21.** Méthode selon la revendication 19, où l'alcoolate de baryum est d'un alcool alkylique $C_{1-15}$, d'un alcool aromatique ou aromatique aliphatique substitué de 6 à 20 atomes de carbone ou d'un alcool allylique.

**22.** Méthode selon l'une quelconque des revendications 16 à 21, où le rapport molaire de Al:Ba est de 3,5 à 4,5.